# NEUE EUROPÄISCHE PATENTSCHRIFT

(11) **EP 1 621 378 B2**
(45) Veröffentlichungstag und Bekanntmachung des Hinweises auf die Entscheidung über den Einspruch: **06.04.2016**
(45) Hinweis auf die Patenterteilung: 02.07.2008
(21) Anmeldenummer: 04291939.9
(22) Anmeldetag: 28.07.2004
(51) Int. Cl.: B60H 1/22, F24H 3/04, F24H 9/18

(54) **Heizungsanordnung mit einem Heizelement, insbesondere für ein Kraftfahrzeug**
Heating device with one heating element, in particular for a vehicle
Dispositif de chauffage comprenant un élément chauffant, en particulier pour un véhicule

(43) Veröffentlichungstag der Anmeldung: 01.02.2006
(73) Patentinhaber: Mahle Behr France Rouffach S.A.S, 68250 Rouffach (FR)
(72) Erfinder: Brun, Michel, 68740 Rustenhart (FR); Miss, Pascal, 67600 Selestat (FR); Mougey, Mathieu, 68190 Ensisheim (FR); Schmittheisler, Christophe, 67680 Epfig (FR); Gogmos, Erwan, 56600 Lanester (FR); Eckerlen, Gérard, 68250 Rouffach (FR)
(74) Vertreter: Grauel, Andreas

(56) Entgegenhaltungen:
- EP-A- 1 340 638
- EP-A1- 1 432 287
- EP-A2- 0 937 595
- WO-A1-03/086018
- DE-A1- 4 404 345
- DE-B4- 19 706 199
- FR-A- 2 791 004

## Beschreibung

Die Erfindung betrifft eine Heizungsanordnung mit einem Heizelement, insbesondere PTC-Element, insbesondere für ein Kraftfahrzeug, gemäß dem Oberbegriff des Anspruchs 1.

Aus der DE 101 44 757 A1 ist eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung im Fußbereich angeordnet ist. Ein derartiger Zuheizer lässt noch Wünsche offen. Gemäß einem offenbarten Ausführungsbeispiel ist ein PTC-Element in Gestalt mehrerer Heizwaben in einem nicht näher beschriebenen Kunststoff-Rahmen angeordnet, der die Luftaustrittsöffnung einfasst.

Die gattungsgemäße FR 2 791 004 offenbart weiterhin eine Heizungsanordnung, insbesondere für ein Kraftfahrzeug, mit mindestens einem Heizelement, insbesondere PTC-Element, das Teil eines Heizstrangs ist, welcher durch eine Baugruppe gebildet ist, wobei mehrere nebeneinander angeordnete Baugruppen Teil der Heizungsanordnung sind, wobei in einer oder zwischen zwei Baugruppen ein Federelement zur Halterung der Baugruppen angeordnet ist. Das Federelement wird auch als Strömungswiderstandselement, insbesondere als Luftströmungswiderstandselement verwendet, das ein zu schnelles Durchströmen der Luft verhindert, so dass die Wärmeübertragung der Heizungsanordnung erheblich verbessert wird.

Die EP 1 157 867 B1 offenbart eine Heizungsanordnung mit einem Rahmen und Öffnungen in einem Seitenholm des Rahmens zur Anströmung von Kühlelementen der Steuereinheit.

Die EP 1 432 287 A1 offenbart eine elektrische Heizvorrichtung mit einem Gehäuse, das an den länglichen Gehäusestirnseiten offen ausgebildet ist, und einem geschichteten Aufbau aus wenigstens einem PTC-Heizelement, einem Radiatorelement, Kontaktblechen zur Stromzuführung und einem Federelement, wobei der geschichtete Aufbau durch das Federelement in dem Gehäuse geklemmt gehalten ist, wobei eine seitlich in dem Gehäuse vorgesehene Öffnung zum Einschieben des Federelements vorgesehen ist.

Es ist Aufgabe der Erfindung, eine verbesserte Heizungsanordnung mit einem Heizelement, insbesondere einem PTC-Element, und mit Strömungswiderstandselementen zur Verfügung zu stellen.

Diese Aufgabe wird gelöst durch eine Heizungsanordnung mit einem Heizelement, insbesondere PTC-Element mit den Merkmalen des Anspruchs 1. Vorteilhafte Ausgestaltungen sind Gegenstand der Unteransprüche.

Erfindungsgemäß ist eine Heizungsanordnung, insbesondere für ein Kraftfahrzeug, mit mindestens einem Heizelement, insbesondere PTC-Element, vorgesehen, das Teil eines Heizstrangs ist, welcher durch eine Baugruppe gebildet ist, wobei mehrere nebeneinander angeordnete Baugruppen Teil der Heizungsanordnung sind, wobei die Heizungsanordnung einen isolierend ausgebildeten Rahmen umfasst, wobei in den Zwischenräumen zwischen einer äußersten Baugruppe und dem Rahmen und in den Zwischenräumen zwischen zwei Baugruppen ein Strömungswiderstandselement angeordnet ist, wobei das Strömungswiderstandselement ein Kunststoffteil ist. Das Strömungswiderstandselement ist durch ein Gitterelement gebildet, wobei die Gitterelemente jeweils aus einem diagonal angeordneten Kunststoffgitter bestehen, das in den Rahmen integriert ist, wobei es an einem Rand des Rahmens angebracht ist. Ein Gitterelement ist hierbei kostengünstig herstellbar und kann einfach montiert werden. Da die Baugruppen, die für verschiedene Heizungsanordnungen bevorzugt identisch ausgebildet sind, in einer großen Stückzahl hergestellt werden können, können die Herstellungskosten gesenkt und die Logistik vereinfacht werden. Ferner lassen sich durch das Vorsehen von zwischen einzelnen Baugruppen angeordneten Strömungswiderstandselementen die gleichen Baugruppen sehr vielfältig verwenden.

Das Strömungswiderstandselement ist erfindungsgemäß an einem isolierend ausgebildeten Kunststoff-Rahmen angebracht, welcher auch die Baugruppen aufnimmt.

Dabei ist es vorzugsweise am Rahmen angespritzt.

Der Rahmen ist bevorzugt mehrteilig ausgebildet. Dabei sind die einzelnen Rahmenelemente bevorzugt mittels Clipsverbindungen miteinander verbunden, wodurch eine sehr einfache und schnelle Montage ohne Werkzeug möglich ist.

Zur Vereinfachung der Montage sind am Rahmen vorzugsweise Abstandshalter vorgesehen, welche zwischen einander zugeordneten Kontaktblechen und/oder Wellrippen angeordnet sind.

Die Baugruppe weist vorzugsweise mindestens zwei Wellrippen auf, welche auf der Außenseite zweier Kontaktbleche zwischen denen ein Heizelement, insbesondere PTC-Element vorgesehen ist, angeordnet sind. Die Baugruppe kann um eine, zwei oder gegebenenfalls mehr Wellrippen erweitert werden, wobei bevorzugt zwischen zwei Wellrippen ein Kontaktblech vorgesehen ist. Dies ermöglicht bei identischem Aufbau des Kernbereichs eine relativ variable Gestaltung der Breite der Baugruppe. Bevorzugt sind die Kontaktbleche zwischen denen ein Heizelement angeordnet ist, im Wesentlichen baugleich ausgeführt und/oder zueinander spiegelsymmetrisch angeordnet.

Die Heizungsanordnung kann sowohl gemeinsam geregelte als auch, insbesondere im Falle von mehrzonigen Klimaanlagen, unabhängig voneinander geregelte Heizstränge umfassen.

Im Folgenden wird die Erfindung anhand von zwei Ausführungsbeispielen unter Bezugnahme auf die Zeichnung im Einzelnen erläutert. In der Zeichnung zeigen:
- Fig. 1: eine vergrößerte Ansicht einer Heizungsanordnung gemäß dem ersten Ausführungsbeispiel,

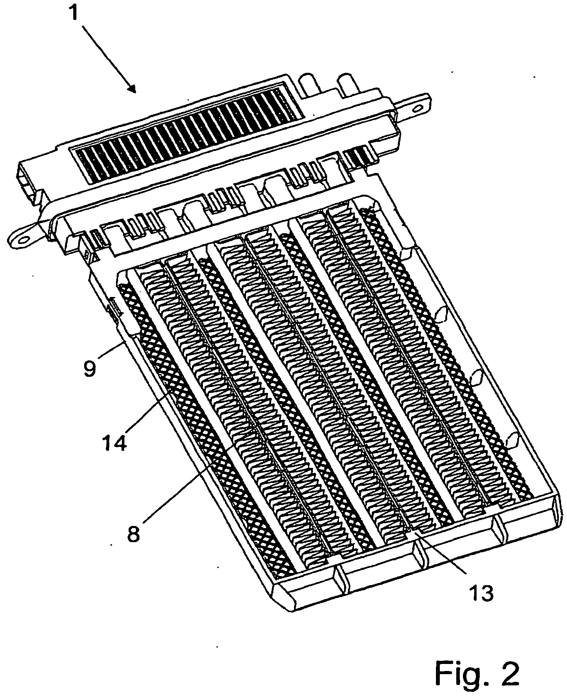

- Fig. 2: eine perspektivische Ansicht der Heizungsanordnung von Fig. 1,
- Fig. 3: eine Ansicht auf eine Heizungsanordnung gemäß dem zweiten Ausführungsbeispiel,
- Fig. 4: eine perspektivische Ansicht der Heizungsanordnung von Fig. 3, und
- Fig. 5: eine Ansicht auf eine nicht erfindungsgemäße Heizungsanordnung, jedoch in einer Basisversion ohne Gitterelemente.

Bei einer PTC-Heizungsanordnung 1 gemäß dem ersten Ausführungsbeispiel ist ein Keramik-PTC-Element 2 zwischen zwei parallel zueinander angeordneten Kontaktblechen 3 (Pluspol) und 4 (Minuspol) eingeklebt, vorliegend mittels eines Klebstoffes (nicht dargestellt). Alternativ kann beispielsweise auch eine Lot-Verbindung vorgesehen sein.

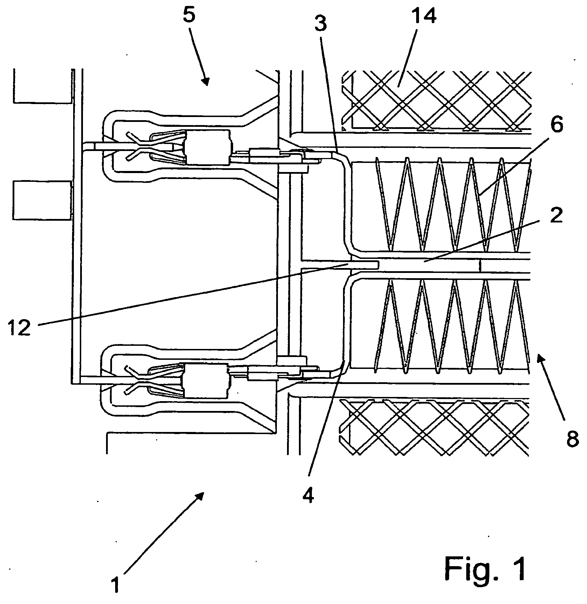

Auf den jeweils dem PTC-Element 2 gegenüberliegenden Seiten der Kontaktbleche 3 und 4 sind mittels einer entsprechenden Klebe-Verbindung Wellrippen 6 angebracht. Je zwei Wellrippen 6, zwei dazwischen angeordnete Kontaktbleche 3 und 4 und ein zwischen den Kontaktblechen 3 und 4 angeordnetes PTC-Element 2 bilden einen als eine Baugruppe ausgebildeten Heizstrang 8. Die Heizungsanordnung 1 wird drei Heizstränge 8 gebildet. Um die zuvor beschriebene Heizungsanordnung 1 herum ist ein Kunststoff-Rahmen 9, vorliegend aus Polyamid, angeordnet. Die Strömungsrichtung der Luft liegt bei Fig. 1 in Blickrichtung.

Zwischen den Kontaktblechen 3 und 4 liegt eine Spannung von 13 V an, die Spannung kann jedoch auch größer sein, bspw. 48 V. Die Kontaktbleche 3 und 4 stehen auf einer Seite des Kunststoff-Rahmens 9 über, wobei sie einen Stecker 9 bilden.

Um die beiden Kontaktbleche 3 und 4 beabstandet zu halten, sind Abstandshalter 12 vorgesehen, die am Kunststoff-Rahmen 9 als nach innen vorstehende Stege ausgebildet sind, und auf einer Seite von den Enden der Kontaktbleche 3 und 4 zwischen dieselben eindringen. Auf der anderen Seite sind am Kunststoff-Rahmen 9 zweite Abstandshalter 13 vorgesehen, die zwischen die Wellrippen 6 ragen.

Die Heizstränge 8 können hierbei als Standard-Elemente dienen, welche in unterschiedliche Rahmen 9 eingesetzt werden können, wodurch die Herstellungskosten verringert werden. Damit die Heizstränge 8 in beliebige Rahmen 9 eingesetzt werden können und ein zu schnelles Durchströmen der Luft durch die Heizungsanordnung 1 zu vermeiden, so dass eine verbesserte Wärmeübertragung an die Luft möglich ist, sind in den Zwischenräumen zwischen den einzelnen Heizsträngen 8 und zwischen den äußersten Heizsträngen 8 und dem Rahmen 9 Strömungswiderstandselemente in Form von Gitterelementen 14 angeordnet. Die Gitterelemente 14 bestehen jeweils aus einem diagonal angeordneten Kunststoffgitter, das in den Rahmen 9 integriert ist, wobei es an einem Rand des Rahmens angebracht, vorliegend angespritzt ist.

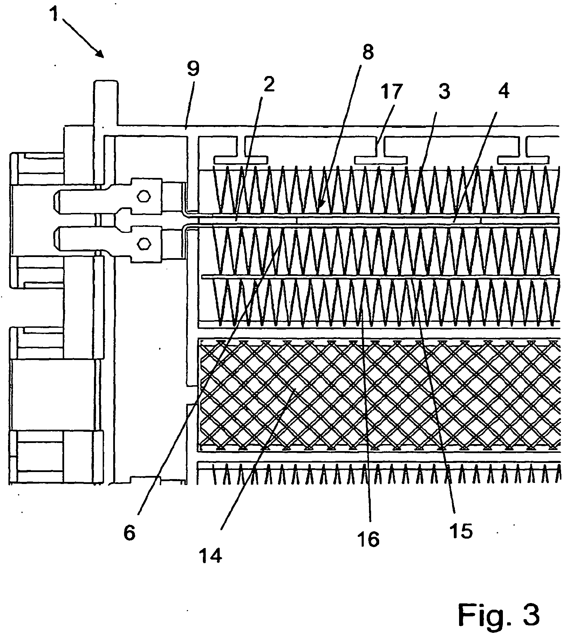

Fig. 3 zeigt ein Heizelement 1 gemäß dem zweiten Ausführungsbeispiel mit einem verbreitert ausgebildeten Heizstrang 8. Hierbei umfasst der Heizstrang 8 neben dem PTC-Element 2, den Kontaktblechen 3 (Pluspol) und 4 (Minuspol), und den Wellrippen 6 ein auf der Außenseite einer Wellrippe 6 angeordnetes zweites Kontaktblech 15 und eine hieran angeordnete weitere Wellrippe 16. Die Heizstränge 8, vorliegend drei, sind entsprechend den Heizsträngen 8 des ersten Ausführungsbeispiels in einem Rahmen 9 aus Kunststoff angeordnet, wobei vorliegend lediglich zwischen den Heizsträngen 8 jeweils ein entsprechend dem ersten Ausführungsbeispiel ausgebildetes Gitterelement 14, also insgesamt zwei Gitterelemente 14, als Strömungswiderstandselemente vorgesehen sind. Am Rahmen 9 sind seitlich Positionierungswände 17 angeordnet, welche den äußersten Heizstrang 8 entlang seiner Längsseite im Rahmen 9 positionieren. Die weitere Positionierung erfolgt entsprechend der des ersten Ausführungsbeispiels mit Hilfe von Abstandshaltern, welche einstückig mit dem Rahmen 9 ausgebildet sind.

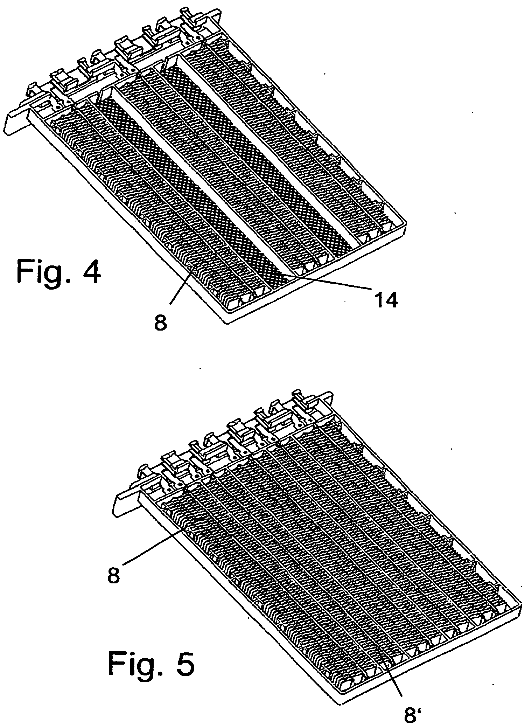

Gemäß einer in Fig. 5 dargestellten Basisversion, welche keine Gitterelemente 14 aufweist, sind anstelle der Gitterelemente 14 des zweiten Ausführungsbeispiels weitere Heizstränge 8' vorgesehen.

### Bezugszeichenliste

1 Heizungsanordnung
2 PTC-Element
3 Kontaktblech
4 Kontaktblech
6, 6' Wellrippe
8, 8' Heizstrang
9 Kunststoff-Rahmen
12 Abstandshalter
13 Abstandshalter
14 Gitterelement
15 Kontaktblech
16 Wellrippe
17 Positionierungswand

## Patentansprüche

1. Heizungsanordnung, insbesondere für ein Kraftfahrzeug, mit mindestens einem Heizelement, insbesondere einem PTC-Element, das Teil eines Heizstrangs (8) ist, welcher durch eine Baugruppe gebildet ist, wobei mehrere nebeneinander angeordnete Baugruppen Teil der Heizungsanordnung (1) sind, wobei die Heizungsanordnung einen isolierend ausgebildeten Rahmen umfasst, wobei in den Zwischenräumen zwischen einer äußersten Baugruppe und dem Rahmen und in den Zwischenräumen zwischen zwei Baugruppen ein Strömungswiderstandselement angeordnet ist, wobei das Strömungswiderstandselement ein Kunststoffteil ist, **dadurch gekennzeichnet, dass** das Strömungswiderstandselement ein Gitterelement (14) ist, wobei die Gitterelemente jeweils aus einem diagonal angeordneten Kunststoffgitter bestehen, das in den Rahmen integriert ist, wobei es an einem Rand des Rahmens angebracht ist.

2. Heizungsanordnung nach Anspruch 1, **dadurch gekennzeichnet, dass** das Strömungswiderstandselement am Rahmen (9) angespritzt ist.

3. Heizungsanordnung einem der vorhergehenden Ansprüche, **dadurch gekennzeichnet, dass** eine Mehrzahl von gleich ausgebildeten Baugruppen in der Heizungsanordnung (1) vorgesehen sind.

4. Heizungsanordnung einem der vorhergehenden Ansprüche, **dadurch gekennzeichnet, dass** ein Rahmen (9) mit Abstandshaltern (12; 13) vorgesehen ist, welche zwischen einander zugeordneten Kontaktblechen (3, 4) und/oder Wellrippen (6) angeordnet sind.

5. Heizungsanordnung nach einem der vorhergehenden Ansprüche, **dadurch gekennzeichnet, dass** ein die Baugruppen und Strömungswiderstandselemente umgebender Rahmen (9) mindestens zweiteilig ausgebildet ist, wobei die einzelnen Elemente mittels Clipsverbindungen miteinander verbunden sind.

6. Heizungsanordnung nach einem der vorhergehenden Ansprüche, **dadurch gekennzeichnet, dass** die Baugruppe mindestens zwei Wellrippen (6, 6') aufweist, welche auf der Außenseite zweier Kontaktbleche (3, 4) zwischen denen ein Heizelement, insbesondere ein PTC-Element (2) vorgesehen ist, angeordnet ist.

7. Heizungsanordnung nach einem der vorhergehenden Ansprüche, **dadurch gekennzeichnet, dass** die Kontaktbleche (3, 4) zwischen denen ein Heizelement angeordnet ist, im Wesentlichen baugleich ausgeführt und/oder zueinander spiegelsymmetrisch angeordnet sind.

8. Heizungsanordnung nach einem der Ansprüche 6 oder 7, **dadurch gekennzeichnet, dass** auf derjenigen der Kontaktseite von Kontaktblech (3, 4) und Wellrippe (6) gegenüberliegenden Seite ein weiteres Kontaktblech (15) und eine weitere Wellrippe (16) angebracht ist.

9. Heizungsanordnung nach einem der Ansprüche 1 bis 7, **dadurch gekennzeichnet, dass** die Heizungsanordnung (1) mehrere unabhängige Heizstränge (8) umfasst.

## Claims

1. A heating device, in particular for a motor vehicle, having at least one heating element, in particular a PTC element, which is part of a heating section (8) formed by a sub-assembly, wherein a plurality of sub-assemblies positioned one beside the other are part of the heating device (1), wherein the heating device comprises a frame designed to provide insulation, wherein a flow resistance element is positioned in the spaces between an outermost sub-assembly and the frame and in the spaces between two sub-assemblies, wherein the flow resistance element is a plastic part, **characterised in that** the flow resistance element is a grid element (14), wherein each grid element consists of a diagonally arranged plastic grid which is integrated in the frame, wherein it is mounted at an edge of the frame.

2. The heating device in accordance with claim 1, **characterised in that** the flow resistance element is injection moulded to the frame (9).

3. The heating device in accordance with one of the preceding claims, **characterised in that** a plurality of sub-assemblies of identical design are provided in the heating device (1).

4. The heating device in accordance with one of the preceding claims, **characterised in that** a frame (9) is provided with spacers (12; 13) which are positioned between contact plates (3, 4) and/or corrugated ribs (6) which are assigned to one another.

5. The heating device in accordance with one of the preceding claims, **characterised in that** a frame (9) encompassing the sub-assemblies and flow resistance elements is designed in at least two parts, wherein the individual elements are connected together by means of clip connectors.

6. The heating device in accordance with one of the preceding claims, **characterised in that** the sub-assembly has at least two corrugated ribs (6, 6') which are positioned on the outsides of two contact plates (3, 4) between which is provided a heating element, in particular a PTC element (2).

7. The heating device in accordance with one of the preceding claims, **characterised in that** the contact plates (3, 4) between which a heating element is positioned are essentially of identical design and/or are positioned mirror symmetrically in relation to one another.

8. The heating device in accordance with one of claims 6 or 7, **characterised in that** a further contact plate (15) and a further corrugated rib (16) are mounted on the side opposite the contact side of the contact plate (3, 4) and the corrugated rib (6).

9. The heating device in accordance with one of claims 1 to 7, **characterised in that** the heating device (1) comprises a plurality of independent heating sections (8).

## Revendications

1. Dispositif de chauffage, en particulier pour un véhicule automobile, comprenant au moins un élément chauffant, en particulier un élément - CTP - à coefficient de température positif qui fait partie d'un circuit de chauffage (8) qui est formé par un ensemble, où plusieurs ensembles disposés les uns à côté des autres font partie du dispositif de chauffage (1), où le dispositif de chauffage comprend un cadre configuré en étant isolant, où un élément de résistance à l'écoulement de l'air est disposé dans les espaces intermédiaires compris entre un ensemble situé le plus à l'extérieur et le cadre, et dans les espaces intermédiaires compris entre deux ensembles, où l'élément de résistance à l'écoulement de l'air est une pièce en matière plastique, **caractérisé en ce que** l'élément de résistance à l'écoulement de l'air est un élément à grille (14), où les éléments à grille se composent à chaque fois d'une grille en matière plastique disposée en diagonale, laquelle grille est intégrée au cadre, où ladite grille est fixée sur un bord du cadre.

2. Dispositif de chauffage selon la revendication 1, **caractérisé en ce que** l'élément de résistance à l'écoulement de l'air est moulé par injection, sur le cadre (9).

3. Dispositif de chauffage selon l'une ou l'autre des revendications précédentes, **caractérisé en ce qu'**il est prévu, dans le dispositif de chauffage (1), une pluralité d'ensembles configurés de façon identique.

4. Dispositif de chauffage selon l'une quelconque des revendications précédentes, **caractérisé en ce qu'**il est prévu un cadre (9) comprenant des pièces d'écartement (12; 13) qui sont disposées entre des tôles de contact (3, 4) et / ou des ailettes ondulées (6), associées entre elles.

5. Dispositif de chauffage selon l'une quelconque des revendications précédentes, **caractérisé en ce qu'**un cadre (9) entourant les ensembles et des éléments de résistance à l'écoulement de l'air est configuré au moins en deux parties, où les différents éléments sont reliés entre eux par des assemblages clipsés.

6. Dispositif de chauffage selon l'une quelconque des revendications précédentes, **caractérisé en ce que** l'ensemble présente au moins deux ailettes ondulées (6, 6') qui sont disposées sur le côté extérieur de deux tôles de contact (3, 4) entre lesquelles il est prévu un élément chauffant, en particulier un élément CTP (2).

7. Dispositif de chauffage selon l'une quelconque des revendications précédentes, **caractérisé en ce que** les tôles de contact (3, 4), entre lesquelles est disposé un élément chauffant, sont réalisées pratiquement de façon identique et / ou disposées de façon symétrique l'une par rapport à l'autre.

8. Dispositif de chauffage selon l'une des revendications 6 ou 7, **caractérisé en ce qu'**une autre tôle de contact (15) et une autre ailette ondulée (16) sont fixées sur le côté qui fait face au côté de contact de la tôle de contact (3, 4) et de l'ailette ondulée (6).

9. Dispositif de chauffage selon l'une quelconque des revendications 1 à 7, **caractérisé en ce que** le dispositif de chauffage (1) comprend plusieurs circuits de chauffage indépendants (8).
